# FASCICULE DE BREVET EUROPEEN

(11) **EP 3 020 938 B1**
(45) Date de publication et mention de la délivrance du brevet: **03.01.2018**
(21) Numéro de dépôt: 15194207.5
(22) Date de dépôt: 12.11.2015
(51) Int. Cl.: F01N 11/00, F01N 5/02, F01N 5/04, F02D 41/14, F02D 41/28

(54) **PROCÉDÉ DE CONTRÔLE D'UNE CHAÎNE DE POST-TRAITEMENT D'UN MOTEUR D'UN SYSTÈME DE COGÉNÉRATION D'ÉNERGIE, ET DISPOSITIF CORRESPONDANT**
VERFAHREN ZUR KONTROLLE EINER NACHBEHANDLUNGSKETTE EINES MOTORS EINES KRAFT-WÄRME-KOPPLUNGSSYSTEMS, UND ENTSPRECHENDE VORRICHTUNG
METHOD FOR CONTROLLING A POST-TREATMENT CHAIN OF A MOTOR OF A POWER COGENERATION SYSTEM, AND CORRESPONDING DEVICE

(30) Priorité: 13.11.2014 FR 1460923
(43) Date de publication de la demande: 18.05.2016
(73) Titulaire: Engie, 92400 Courbevoie (FR)
(72) Inventeur: COLLING, Gérrard, 95290 L'ISLE ADAM (FR); HSSAINI, Youness, 95800 CERGY (FR)
(74) Mandataire: Underwood, Nicolas Patrick

(56) Documents cités:
- DE-A1-102009 050 324
- US-A- 3 895 611
- US-A1- 2011 213 547
- US-B1- 6 581 371

## Description

### Arrière-plan de l'invention

L'invention se rapporte au domaine général des systèmes de cogénération, et en particulier aux chaînes de post-traitement de ces systèmes.

Une chaîne de post-traitement comporte une chaîne d'échappement et un ou plusieurs organes qui traitent les effluents gazeux traversant la chaîne de post-traitement.

Les systèmes de cogénération peuvent être utilisés pour fournir à la fois de la chaleur et de l'électricité à un bâtiment, par exemple en utilisant un moteur thermique dont l'énergie mécanique est transformée en électricité et en chaleur.

Il existe des règlementations relatives aux rejets polluants des moteurs de systèmes de cogénération. Un organe de traitement tel qu'un catalyseur est utilisé pour limiter et transformer ces rejets, notamment par des réactions d'oxydation et de réduction. Un catalyseur met en oeuvre des réactions d'oxydo-réduction pour traiter les oxydes d'azote (NOx), les hydrocarbures imbrûlés (HC), et le monoxyde de carbone (CO).

Certaines réglementations imposent un contrôle périodique des émissions de polluants, ce qui nécessite qu'un technicien se déplace là où est installé le système de cogénération pour mesurer à la sortie de la chaîne de post-traitement la quantité de polluants.

Cette solution n'est pas optimale, puisqu'elle requiert le déplacement d'une personne.

Les solutions selon l'art antérieur ne sont pas non plus satisfaisantes en ce qui concerne les émissions de polluants.

L'invention vise notamment à pallier ces inconvénients. Le document US 6,581,371 décrit un moteur pour véhicule qui utilise des sondes à oxygène placées en aval des catalyseurs dans une chaîne d'échappement du moteur. La fréquence de lecture des sondes est fixe, et elle n'est pas ajustée.

En outre, le document US 2011/0213547 décrit un moteur de véhicule automobile dans lequel une sonde à oxygène est placée en aval d'un catalyseur.

### Objet et résumé de l'invention

La présente invention répond à ce besoin en proposant un procédé de contrôle d'une chaîne de post-traitement d'un moteur d'un système de cogénération d'énergie utilisé pour fournir de l'électricité et de la chaleur à un bâtiment, la chaîne de post-traitement comportant au moins un organe de post-traitement des gaz d'échappements traversant la chaîne de post-traitement.

Selon une caractéristique générale du procédé, la chaîne de post-traitement comporte une sonde à oxygène disposée en aval dudit au moins un organe et l'on mesure la quantité d'oxygène en aval dudit au moins un organe par une lecture d'un signal fourni par ladite sonde à une fréquence prédéterminée.

Ainsi, c'est en installant directement dans la chaîne de post-traitement et en aval de l'organe de post-traitement une sonde à oxygène, par exemple une sonde lambda, et en mettant en oeuvre une lecture d'un signal fourni par cette sonde à une fréquence prédéterminée que l'on évite le déplacement d'un technicien et que l'on améliore la détection d'une défaillance de l'organe traitement.

On peut ainsi choisir la fréquence la plus adaptée aux souhaits de l'utilisateur. A titre d'exemple, on peut choisir une fréquence qui favorise la détection d'une défaillance de l'organe de post-traitement.

L'utilisation d'une fréquence prédéterminée est particulièrement adaptée aux systèmes de cogénération d'énergie. En effet, dans un tel système, le moteur fonctionne à un régime stable, et il n'est pas nécessaire d'observer par différentes sondes des régimes transitoires qui n'apparaissent pas dans un système de cogénération.

Aussi, c'est en lisant un signal fourni par ladite sonde à une fréquence prédéterminée que la quantité de données de mesure à traiter ultérieurement est limitée. Il est donc possible d'utiliser des appareils pour le traitement des mesures qui sont simples, peu onéreux, et pour lesquels il n'est par exemple pas nécessaire de traiter un bruit lié à un grand nombre de mesures.

Dans un mode particulier de mise en oeuvre, ladite fréquence prédéterminée est augmentée lors d'une élévation d'au moins une température du système de cogénération.

Les inventeurs ont observé qu'il est préférable d'utiliser une fréquence prédéterminée élevée lorsque la température est élevée, puisque c'est dans ces conditions qu'une détérioration de l'organe de post-traitement peut apparaître. En augmentant la fréquence à laquelle la sonde est lue, on peut déterminer de manière plus précise quand une détérioration apparaît, puisqu'une détérioration a un impact sur la qualité de la catalyse et donc sur la concentration en rejets polluants en aval de l'organe de post-traitement.

Selon un mode particulier de mise en oeuvre, ladite fréquence prédéterminée est augmentée pour être comprise entre 1/60Hz et 100Hz lors d'une élévation d'au moins une température, la fréquence étant comprise entre 1/300Hz et 1/60Hz sinon.

En d'autres termes, si aucune température du système de cogénération n'est élevée, on maintient une fréquence basse, mais qui permet néanmoins de détecter de manière satisfaisante des détériorations de l'organe de post-traitement.

A titre indicatif, on peut augmenter proportionnellement la fréquence en fonction de la température, et ce dans les plages indiquées ci-avant, c'est-à-dire en augmentant la fréquence proportionnellement depuis 1/300Hz jusque 100Hz.

Selon un mode particulier de mise en oeuvre, ladite au moins une température est choisie parmi la température de l'air admis dans le moteur, la température de l'huile du moteur, et la température des gaz d'échappement.

Selon un mode particulier de mise en oeuvre, ladite fréquence prédéterminée est augmentée si la température de l'air admis dans le moteur est supérieure à 25°C, ou si la température de l'huile est supérieure à 110°C, ou si la température des gaz d'échappement dépasse 800°C.

Selon un mode particulier de mise en oeuvre, on ne mesure pas la quantité d'oxygène en aval dudit au moins un organe si la puissance électrique générée par ledit système de cogénération d'énergie est inférieure à un seuil.

Un système de cogénération d'énergie est destiné à fournir toujours la même puissance électrique nominale. A cet effet, un tel système fonctionne en régime stationnaire pour atteindre une valeur de puissance nominale.

Dans ce mode particulier de mise en oeuvre, on choisit un seuil préférentiellement proche de la puissance électrique nominale (par exemple 90%), et l'on ne met en oeuvre des mesures que si le seuil est atteint. Cela permet de ne prendre en compte que les valeurs qui sont représentatives du fonctionnement normal du système de cogénération d'énergie, quand il y a production d'électricité. En d'autres termes, il n'est pas nécessaire de mettre en oeuvre des mesures pendant les régimes transitoires, mais uniquement dans le régime permanent du système de cogénération d'énergie.

Dans une variante de ce mode particulier de réalisation, on ne mesure pas la quantité d'oxygène en aval dudit au moins un organe si en outre le nombre de tours par minute du moteur n'est pas dans une plage délimitée. Cette plage délimitée peut par exemple être choisie autour de la valeur de nombre de tours par minute qui correspond au régime stationnaire du système de cogénération d'énergie, par exemple 1500 tours par minute à plus ou moins 10%.

On peut noter que la puissance électrique générée par un système de cogénération d'énergie est déjà une valeur mesurée sur les systèmes de cogénération d'énergie selon la technique antérieure, et tel est également le cas du nombre de tours par minute du moteur.

Selon un mode particulier de mise en oeuvre, on contrôle le fonctionnement du moteur en fonction de la quantité d'oxygène mesurée en aval de l'organe de post-traitement.

Ce mode particulier de mise en oeuvre permet par exemple de faire fonctionner le moteur dans un mode dégradé dès lors que la sonde à oxygène placée en aval de l'organe de post-traitement mesure une valeur anormale indiquant une détérioration de l'organe de post-traitement.

L'invention propose également un dispositif de contrôle d'une chaîne de post-traitement d'un moteur d'un système de cogénération d'énergie utilisé pour fournir de l'électricité et de la chaleur à un bâtiment, la chaîne de post-traitement comportant au moins un organe de post-traitement des gaz d'échappements traversant la chaîne de post-traitement.

Selon une caractéristique générale, la chaîne de post-traitement comporte une sonde à oxygène disposée en aval dudit au moins un organe, et le dispositif comporte des moyens configurés pour lire un signal fourni par ladite sonde pour mesurer la quantité d'oxygène en aval dudit au moins un organe à une fréquence prédéterminée.

Selon un mode particulier de réalisation, le dispositif comporte des moyens configurés pour augmenter ladite fréquence prédéterminée lors d'une élévation d'au moins une température du système de cogénération.

Selon un mode particulier de réalisation, lesdits moyens configurés pour augmenter ladite fréquence prédéterminée sont configurer pour augmenter la fréquence prédéterminée pour qu'elle soit comprise entre 1/60Hz et 100Hz lors d'une élévation d'au moins une température, la fréquence étant comprise entre 1/300Hz et 1/60Hz sinon.

Selon un mode particulier de réalisation, ladite au moins une température est choisie parmi la température de l'air admis dans le moteur, la température de l'huile du moteur, et la température des gaz d'échappement.

Selon un mode particulier de réalisation, lesdits moyens configurés pour augmenter ladite fréquence prédéterminée sont configurer pour augmenter la fréquence prédéterminée si la température de l'air admis dans le moteur est supérieure à 25°C, ou si la température de l'huile est supérieure à 110°C, ou si la température des gaz d'échappement dépasse 800°C.

Selon un mode particulier de réalisation, lesdits moyens configurés pour lire un signal fourni par ladite sonde pour mesurer la quantité d'oxygène en aval dudit au moins un organe à une fréquence prédéterminée sont en outre configurés pour ne pas lire ladite quantité d'oxygène en aval dudit au moins un organe si la puissance électrique générée par ledit système de cogénération d'énergie est inférieure à un seuil.

L'invention propose également un système de cogénération d'énergie utilisé pour fournir de l'électricité et de la chaleur à un bâtiment, comprenant un moteur, une chaîne de post-traitement comportant au moins un organe de post-traitement des gaz d'échappements et une sonde à oxygène disposée en aval dudit au moins un organe, et un dispositif de contrôle tel que défini ci-avant.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique un système de cogénération d'énergie selon un mode de réalisation de l'invention,
- la figure 2 représente les différentes étapes d'un procédé de contrôle d'une chaîne de post-traitement d'un système de cogénération d'énergie selon un mode de mise en oeuvre de l'invention,
- les figures 3 et 4 représentes les tensions de sorties de sondes à oxygène utilisées dans une chaîne de post-traitement d'un système de cogénération d'énergie.

### Description détaillée d'un mode de réalisation

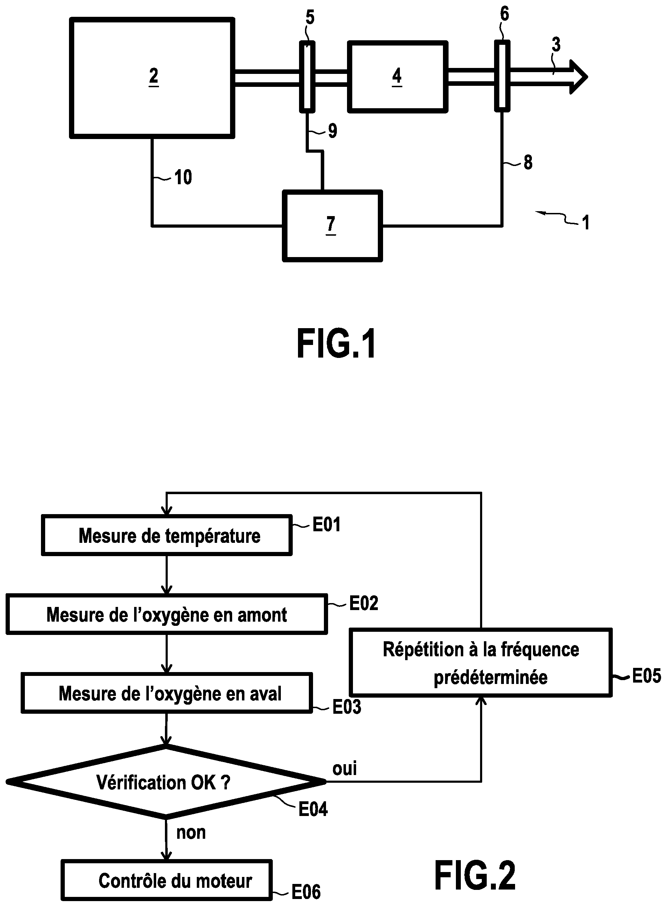

Sur la figure 1, on a représenté un système de cogénération 1, par exemple un système de cogénération utilisé pour fournir de l'électricité et de la chaleur à un bâtiment.

Le système de cogénération 1 comporte un moteur 2, par exemple un moteur thermique, auquel est connectée une chaîne de post-traitement 3. La chaîne de post-traitement reçoit les gaz d'échappement du moteur, c'est-à-dire tous les effluents qui sortent du moteur.

Un organe de post-traitement 4, par exemple un catalyseur, est agencé pour traiter les gaz traversant la chaîne de post-traitement 3. L'organe de post-traitement peut mettre en oeuvre des réactions d'oxydoréduction pour traiter des hydrocarbures, des oxydes d'azote, ou encore du monoxyde de carbone.

La chaîne de post-traitement comporte également une sonde à oxygène 5 en amont de l'organe de post-traitement 4. Cette sonde à oxygène 5, dite « sonde amont », est utilisée pour vérifier que le mélange air/carburant qui arrive dans le moteur est stoechiométrique, par exemple égal à 17,2.

Afin de déterminer que l'organe de post-traitement 4 fonctionne correctement, la chaîne de post-traitement comporte une sonde à oxygène 6 en aval de l'organe de post-traitement 4. Cette sonde à oxygène 6, dite « sonde aval » fournit une information sur la quantité de polluants qui n'ont pas été traités puisque cette quantité augmente dès lors que la quantité d'oxygène mesurée diminue.

Pour contrôler la sonde amont 5 et la sonde aval 6, le système 1 comporte un dispositif de contrôle 7 de la chaîne de post-traitement. Ce dispositif de contrôle comporte des moyens configurés pour lire un signal fourni par la sonde aval pour qu'elle mesure la quantité d'oxygène en aval dudit au moins un organe à une fréquence prédéterminée.

La sonde aval 6 communique avec le dispositif 7 au moyen d'une liaison 8, et la sonde amont communique avec le dispositif au moyen d'une liaison 9. Les liaisons 8 et 9 peuvent également permettre la lecture des signaux fournis par des sondes.

Lorsque la sonde amont 5 détecte que le mélange air/carburant n'est pas stoechiométrique, le dispositif de contrôle 7 peut contrôler le moteur 2 pour faire varier la quantité de carburant et/ou l'avance de l'allumage pour ainsi conserver la stoechiométrie du mélange.

Lorsque la sonde aval 6 détecte une quantité trop élevée de polluants non traités, le dispositif de contrôle 7 peut contrôler le moteur pour baisser son régime voire l'arrêter si cela est nécessaire. En effet, si une quantité importante de polluants traverse l'organe de post-traitement 4, ceci indique que l'organe de post-traitement 4 est défaillant, et il est alors nécessaire de baisser le régime du moteur 2 pour que son fonctionnement produise un niveau acceptable de polluants en sortie de l'organe de post-traitement 4. Il peut également être nécessaire d'arrêter le moteur 2.

Le système 1 peut également comporter une pluralité de capteurs qui communiquent avec le dispositif 7, notamment des capteurs de température, et plus particulièrement des capteurs de la température de l'air admis dans le moteur, de la température de l'huile du moteur, et de la température des gaz d'échappement

Sur la figure 2, on a représenté un procédé de contrôle d'une chaîne de post-traitement, par exemple la chaîne de post-traitement 3 du moteur 2 du système de cogénération 1 décrit en se référant à la figure 1.

Dans une première étape E01, on mesure une ou plusieurs températures parmi la température de l'air admis dans le moteur, la température de l'huile du moteur, et la température des gaz d'échappement. Ceci permet de déterminer quand il est nécessaire d'augmenter la fréquence pour mieux surveiller l'organe de post-traitement. A titre indicatif, on peut augmenter cette fréquence si la température de l'air admis dans le moteur est supérieure à 25°C, ou si la température de l'huile est supérieure à 110°C, ou si la température des gaz d'échappement dépasse 800°C. Une fréquence élevée peut être comprise entre 1/60Hz et 100Hz.

Dans une deuxième étape E02, on mesure la concentration en oxygène en amont de l'organe de post-traitement au moyen de la sonde amont 5, ce qui peut permettre de régler précisément le mélange air/carburant.

Dans une troisième étape E03, on mesure la concentration en oxygène en aval de l'organe de post-traitement au moyen de la sonde aval 6.

Dans une étape E04, on vérifie que la mesure de l'oxygène en aval de l'organe de post-traitement correspond à un fonctionnement correct de cet organe. En d'autres termes, on vérifie qu'il n'y a pas de détérioration de cet organe, puisqu'une telle détérioration a pour effet d'augmenter la quantité de polluants en sortie de l'organe de post-traitement.

Si cette vérification est positive, on peut mettre en oeuvre une répétition (étape E05) des étapes E01 à E04, avec une lecture d'un signal fourni par la sonde aval à la fréquence prédéterminée.

Si cette vérification est négative, alors on peut contrôler le moteur (étape E06) pour que le niveau de polluants en sortie de l'organe de post-traitement soit acceptable, une vérification négative indiquant une défaillance de l'organe de post-traitement. On peut ensuite mettre en oeuvre une nouvelle fois les étapes E01 à E04.

On peut noter que l'ordre des étapes E01 à 03 peut être modifié, et que ces trois étapes peuvent être mises en oeuvre de manière quasi-simultanée.

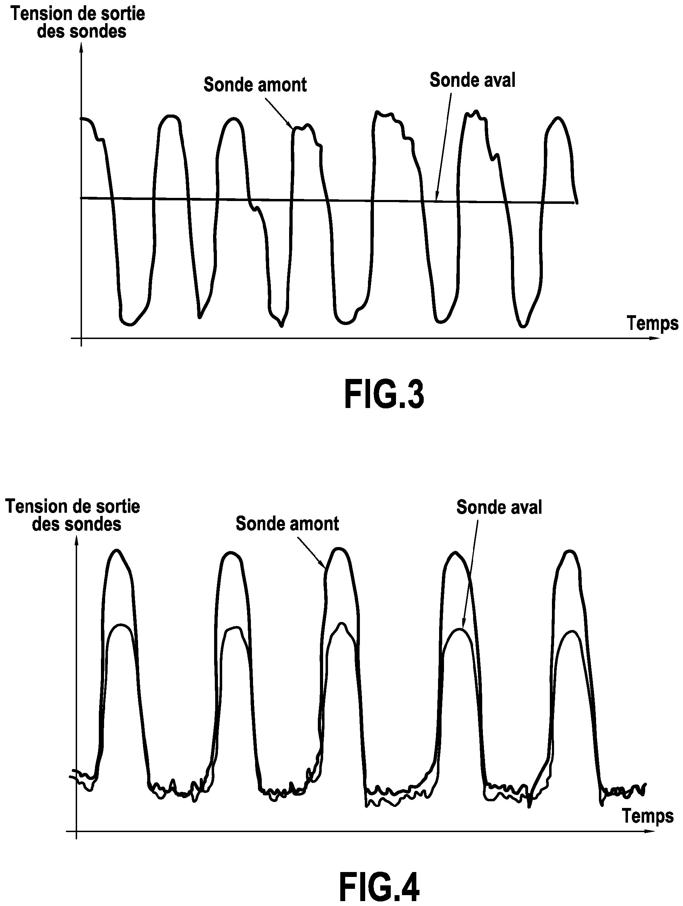

Sur la figure 3, on a représenté les tensions de sorties de la sonde amont 5 et de la sonde aval 6, alors que le moteur est en fonctionnement et que l'organe de post-traitement a un comportement correct. Ici, la fréquence prédéterminée est égale à 1000Hz et une température des gaz d'échappement est égale à 700°C.

Comme on peut le constater, la quantité d'oxygène mesurée par la sonde amont, qui correspond à une tension et également au niveau de polluants, varie de manière quasi-périodique, et cette valeur suit le fonctionnement du moteur. L'organe de post-traitement permet d'obtenir une quantité de polluants presque constante et d'un niveau acceptable, comme cela est visible sur la figure 3 où la tension de sortie de la sonde aval est sensiblement constante.

Sur la figure 4, on a représenté ces mêmes tensions de sortie dans une situation dans laquelle l'organe de post-traitement ne fonctionne plus de manière satisfaisante.

Comme on peut le constater sur cette figure, la tension de sortie de la sonde aval suit celle de la sonde amont, signe que le niveau de polluants peut devenir inacceptable. Ceci peut conduire le dispositif de contrôle 7 à limiter le régime du moteur 2 et à alerter un utilisateur d'une possible défaillance de l'organe de post-traitement.

## Revendications

1. Procédé de contrôle d'une chaîne de post-traitement (3) d'un moteur (2) d'un système (1) de cogénération d'énergie utilisé pour fournir de l'électricité et de la chaleur à un bâtiment, la chaîne de post-traitement comportant au moins un organe de post-traitement (4) des gaz d'échappements traversant la chaîne de post-traitement,
**caractérisé en ce que** la chaîne de post-traitement comporte une sonde à oxygène (6) disposée en aval dudit au moins un organe et **en ce que** l'on mesure (E02) la quantité d'oxygène en aval dudit au moins un organe par une lecture d'un signal fourni par ladite sonde à une fréquence prédéterminée,
ladite fréquence prédéterminée étant augmentée lors d'une élévation d'au moins une température du système de cogénération,
ladite fréquence prédéterminée étant augmentée pour être comprise entre 1/60Hz et 100Hz lors d'une élévation d'au moins une température, la fréquence étant comprise entre 1/300Hz et 1/60Hz sinon.

2. Procédé selon la revendication 1, dans lequel ladite au moins une température est choisie parmi la température de l'air admis dans le moteur, la température de l'huile du moteur, et la température des gaz d'échappement.

3. Procédé selon la revendication 2, dans lequel ladite fréquence prédéterminée est augmentée si la température de l'air admis dans le moteur est supérieure à 25°C, ou si la température de l'huile est supérieure à 110°C, ou si la température des gaz d'échappement dépasse 800°C.

4. Procédé selon l'une quelconque des revendications 1 à 3, dans lequel on ne mesure pas la quantité d'oxygène en aval dudit au moins un organe si la puissance électrique générée par ledit système de cogénération d'énergie est inférieure à un seuil.

5. Procédé selon l'une quelconque des revendications 1 à 4, dans lequel on contrôle le fonctionnement du moteur en fonction de la quantité d'oxygène mesurée.

6. Système de cogénération d'énergie utilisé pour fournir de l'électricité et de la chaleur à un bâtiment, comprenant un moteur (2), une chaîne de post-traitement (3) comportant au moins un organe de post-traitement (4) des gaz d'échappements traversant la chaîne de post-traitement et un dispositif de contrôle de la chaîne de post-traitement (3) du moteur (2) du système (1) de cogénération d'énergie,
**caractérisé en ce que** la chaîne de post-traitement comporte une sonde à oxygène (6) disposée en aval dudit au moins un organe, et le dispositif comporte des moyens configurés (7) pour lire un signal fourni par ladite sonde pour mesurer la quantité d'oxygène en aval dudit au moins un organe à une fréquence prédéterminée,
le dispositif comprenant des moyens configurés pour augmenter ladite fréquence prédéterminée lors d'une élévation d'au moins une température du système de cogénération, et lesdits moyens configurés pour augmenter ladite fréquence prédéterminée sont configurer pour augmenter la fréquence prédéterminée pour qu'elle soit comprise entre 1/60Hz et 100Hz lors d'une élévation d'au moins une température, la fréquence étant comprise entre 1/300Hz et 1/60Hz sinon.

7. Système selon la revendication 6, dans lequel ladite au moins une température est choisie parmi la température de l'air admis dans le moteur, la température de l'huile du moteur, et la température des gaz d'échappement.

8. Système selon la revendication 7, dans lequel lesdits moyens configurés pour augmenter ladite fréquence prédéterminée sont configurer pour augmenter la fréquence prédéterminée si la température de l'air admis dans le moteur est supérieure à 25°C, ou si la température de l'huile est supérieure à 110°C, ou si la température des gaz d'échappement dépasse 800°C.

9. Système selon l'une quelconque des revendications 6 à 8, dans lequel lesdits moyens configurés (7) pour lire un signal fourni par ladite sonde pour mesurer la quantité d'oxygène en aval dudit au moins un organe à une fréquence prédéterminée sont en outre configurés pour ne pas lire ladite quantité d'oxygène en aval dudit au moins un organe si la puissance électrique générée par ledit système de cogénération d'énergie est inférieure à un seuil.

## Patentansprüche

1. Verfahren zur Kontrolle einer Nachbehandlungskette (3) eines Motors (2) eines Kraft-Wärme-Kopplungssystems (1), das verwendet wird, um einem Gebäude Strom und Wärme zu liefern, wobei die Nachbehandlungskette wenigstens ein Organ zur Nachbehandlung (4) der die Nachbehandlungskette durchströmenden Abgase umfasst,
**dadurch gekennzeichnet, dass** die Nachbehandlungskette eine Sauerstoffsonde (6) umfasst, die stromab des wenigstens einen Organs angeordnet ist, und dass die Sauerstoffmenge stromab des wenigstens einen Organs durch ein Auslesen eines durch die Sonde mit einer vorbestimmten Frequenz gelieferten Signals gemessen wird (E02),
wobei die vorbestimmte Frequenz bei einer Erhöhung wenigstens einer Temperatur des Kraft-Wärme-Kopplungssystems erhöht wird,
wobei die vorbestimmte Frequenz erhöht wird, um zwischen 1/60 Hz und 100 Hz bei einer Erhöhung wenigstens einer Temperatur zu liegen, wobei die Frequenz sonst zwischen 1/300 Hz und 1/60 Hz liegt.

2. Verfahren nach Anspruch 1, bei dem die wenigstens eine Temperatur aus der Temperatur der in den Motor eingelassenen Luft, der Temperatur des Öls des Motors und der Temperatur der Abgase ausgewählt ist.

3. Verfahren nach Anspruch 2, bei dem die vorbestimmte Frequenz erhöht wird, wenn die Temperatur der in den Motor eingelassenen Luft mehr als 25 °C beträgt oder wenn die Temperatur des Öls mehr als 110 °C beträgt oder wenn die Temperatur der Abgase 800 °C überschreitet.

4. Verfahren nach einem der Ansprüche 1 bis 3, bei dem die Sauerstoffmenge stromab des wenigstens einen Organs nicht gemessen wird, wenn die durch das Kraft-Wärme-Kopplungssystem erzeugte elektrische Leistung unterhalb einer Schwelle liegt.

5. Verfahren nach einem der Ansprüche 1 bis 4, bei dem der Betrieb des Motors in Abhängigkeit von der gemessenen Sauerstoffmenge gesteuert wird.

6. Kraft-Wärme-Kopplungssystem, das verwendet wird, um einem Gebäude Strom und Wärme zu liefern, umfassend einen Motor (2), eine Nachbehandlungskette (3) mit wenigstens einem Organ zur Nachbehandlung (4) der Abgase die die Nachbehandlungskette durchströmen, und eine Vorrichtung zur Kontrolle der Nachbehandlungskette (3) des Motors (2) des Kraft-Wärme-Kopplungssystems (1),
**dadurch gekennzeichnet, dass** die Nachbehandlungskette eine Sauerstoffsonde (6) umfasst, die stromab des wenigstens einen Organs angeordnet ist, und die Vorrichtung Mittel (7) umfasst, die dazu ausgelegt sind, ein durch die Sonde geliefertes Signal auszulesen, um die Sauerstoffmenge stromab des wenigstens einen Organs mit einer vorbestimmten Frequenz zu messen,
wobei die Vorrichtung Mittel umfasst, die dazu ausgelegt sind, die vorbestimmte Frequenz bei einer Erhöhung wenigstens einer Temperatur des Kraft-Wärme-Kopplungssystems zu erhöhen, und die Mittel, die dazu ausgelegt sind, die vorbestimmte Frequenz zu erhöhen, dazu ausgelegt sind, die vorbestimmte Frequenz zu erhöhen, damit sie zwischen 1/60 Hz und 100 Hz bei einer Erhöhung wenigstens einer Temperatur liegt, wobei die Frequenz sonst zwischen 1/300 Hz und 1/60 Hz liegt.

7. System nach Anspruch 6, bei dem die wenigstens eine Temperatur aus der Temperatur der in den Motor eingelassenen Luft, der Temperatur des Öls des Motors und der Temperatur der Abgase ausgewählt ist

8. System nach Anspruch 7, bei dem die Mittel, die dazu ausgelegt sind, die vorbestimmte Frequenz zu erhöhen, dazu ausgelegt sind, die vorbestimmte Frequenz zu erhöhen, wenn die Temperatur der in den Motor eingelassenen Luft mehr als 25 °C beträgt oder wenn die Temperatur des Öls mehr als 110 °C beträgt oder wenn die Temperatur der Abgase 800 °C überschreitet.

9. System nach einem der Ansprüche 6 bis 8, bei dem die Mittel (7), die dazu ausgelegt sind, ein durch die Sonde geliefertes Signal auszulesen, um die Sauerstoffmenge stromab des wenigstens einen Organs mit einer vorbestimmten Frequenz zu messen, ferner dazu ausgelegt sind, die Sauerstoffmenge stromab des wenigstens einen Organs nicht auszulesen, wenn die durch das Kraft-Wärme-Kopplungssystem erzeugte elektrische Leistung unter einer Schwelle liegt.

## Claims

1. A method for controlling an aftertreatment chain (3) of a motor (2) of a power cogeneration system (1) used to supply electricity and heat to a building, the aftertreatment chain including at least one aftertreatment member (4) for exhaust gases traversing the aftertreatment chain,
**characterized in that** the aftertreatment chain includes an oxygen sensor (6) positioned downstream from said at least one member and **in that** one measures (E02) the quantity of oxygen downstream from said at least one member by reading a signal supplied by said sensor at a predetermined frequency,
said predetermined frequency being increased when an increase of at least one temperature of the cogeneration system occurs,
said predetermined frequency being increased to be comprised between 1/60 Hz and 100 Hz when an elevation occurs in at least one temperature, the frequency being comprised between 1/300 Hz and 1/60 Hz otherwise.

2. The method according to claim 1, wherein said at least one temperature is chosen from among the temperature of the air allowed into the motor, the temperature of the oil of the motor, and the temperature of the exhaust gases.

3. The method according to claim 2, wherein said predetermined frequency is increased if the temperature of the air allowed into the motor is above 25°C, or if the temperature of the oil is above 110°C, or if the temperature of the exhaust gases exceeds 100°C.

4. The method according to any one of claims 1 to 3, wherein the quantity of oxygen is not measured downstream from said at least one member if the electric power generated by the energy cogeneration system is below a threshold.

5. The method according to any one of claims 1 to 4, wherein the operation of the motor is controlled based on the measured quantity of oxygen.

6. An energy cogeneration system used to supply electricity and heat to a building, comprising a motor (2), a aftertreatment chain (3) including at least one aftertreatment member (4) for exhaust gases traversing the aftertreatment chain, and a device for controlling the aftertreatment chain (3) of the motor (2) of the energy cogeneration system (1),
**characterized in that** the aftertreatment chain includes an oxygen sensor (6) positioned downstream from said at least one member, and the device includes means (7) configured to read a signal provided by said sensor to measure the quantity of oxygen downstream from said at least one member at a predetermined frequency,
the device comprising means configured to increase said predetermined frequency when an increase occurs of at least one temperature of the cogeneration system, and said means configured to increase said predetermined frequency are configured to increase the predetermined frequency so that it is comprised between 1/60 Hz and 100 Hz when an increase occurs of at least one temperature, the frequency being comprised between 1/300 Hz and 1/60 Hz otherwise.

7. The system according to claim 6, wherein said at least one temperature is chosen from among the temperature of the air allowed into the motor, the temperature of the oil of the motor, and the temperature of the exhaust gases.

8. The system according to claim 7, wherein said means configured to increase said predetermined frequency are configured to increase the predetermined frequency if the temperature of the air allowed into the motor is above 25°C, or if the temperature of the oil is above 110°C, or if the temperature of the exhaust gases exceeds 800°C.

9. The system according to any one of claims 6 to 8, wherein said means (7) configured to read a signal provided by said sensor to measure the quantity of oxygen downstream from said at least one member at a predetermined frequency are further configured not to read said quantity of oxygen downstream from said at least one member if the electric power generated by said energy cogeneration system is below a threshold.
